# EUROPEAN PATENT SPECIFICATION

(11) **EP 4 314 575 B1**
(45) Date of publication and mention of the grant of the patent: **25.11.2026**
(21) Application number: 22781778.0
(22) Date of filing: 25.01.2022
(51) Int. Cl.: F16B 23/00, B21K 1/44, B25B 15/00

(54) **A LIGHTWEIGHT FASTENER AND A CUSTOMIZED DRIVE APPARATUS THEREOF**
LEICHTGEWICHTIGES BEFESTIGUNGSELEMENT UND ANGEPASSTE ANTRIEBSVORRICHTUNG DAFÜR
ÉLÉMENT DE FIXATION LÉGER ET APPAREIL D'ENTRAÎNEMENT PERSONNALISÉ ASSOCIÉ

(30) Priority: 31.03.2021 TR 202105790
(43) Date of publication of application: 07.02.2024
(73) Proprietor: Norm Izmir Civata Sanayi Ticaret Anonim Sirketi, Cigli/Izmir (TR)
(72) Inventor: INCE, Umut, Cigli/Izmir (TR); KILICASLAN, Cenk, Cigli/Izmir (TR); YURTDAS, Sezgin, Cigli/Izmir (TR); TANRIKULU, Baris, Cigli/Izmir (TR)
(74) Representative: Kaya, Erdem
(86) International application number: PCT/TR2022/050063
(87) International publication number: WO 2022/211757

(56) References cited:
- TW-A- 201 226 725
- TW-A- 201 226 725
- US-A- 2 015 878
- US-A- 2 180 633
- US-A- 3 411 555
- US-A1- 2011 048 181
- US-A1- 2019 219 089

## Description

### Technical Field

The present invention relates to a new lightweight fastener designed for use in a variety of industries, especially in the automotive industry, such as construction, machine manufacturing, building and railway, and to a drive apparatus compatible with said fastener that applies the torque required for its tightening and loosening. More specifically, the present invention relates to a self-aligning and cost-efficient lightweight fastener as it requires less raw material use thanks to its new design, and to a driving apparatus that applies an effective torque transfer for insertion and removal of this fastener into the workpiece at the desired performance.

### State of the Art

Mandatory emission targets have been set for vehicles in road transport, where carbon emissions are largely caused, by published regulations since the negative effects of carbon emissions on climate change have reached dangerous levels in recent years. Therefore, weight reduction efforts in the automotive industry have gained importance in recent years in order to reduce the fuel consumption that causes carbon emissions. A significant reduction in the weight of the produced vehicle can be achieved thanks to the weight reduction works on the fasteners, considering the high number of connections used in a passenger vehicle. Targeting weight reduction by making changes in components used in the construction and machine manufacturing industry as well as automotive is one of the most important engineering applications. Any weight reduction application that can be made without compromising the safety, integrity, physical and mechanical properties of the connection affects many factors from assembly to product or structure performance and cost.

Fasteners with hexagonal head form are widely used in the fastener industry. Torque is applied to the head part with six corner shapes so that the fastener rotates axially and thus engages the helical threads of the other fastener in which it is mated during the assembly of the fastener. The torque applied by a standard key or drive apparatus to tighten or loosen the fastener is transmitted through certain sections where the key or drive apparatus contacts the hexagonal head of the fastener during tightening and loosening. These contacts in the hexagonal head part correspond to a very small portion of the head of the fastener. Therefore, widely used fasteners with hexagonal heads contain more raw material than is required in the head for the purpose of tightening and loosening. This creates a disadvantage in terms of the weight, processing and cost of the fastener. In order to use a standard drive apparatus for tightening and loosening processes in the said fasteners, it is provided in weight reduction by leaving the parts where only the torque applied with the drive apparatus is transmitted in the head part and removing the other parts in order to protect the six corner shapes of the head part of the fastener. This situation limits the rate of weight reduction and the weight reduction in the designs cannot generally exceed the range of 20-28%.

In the prior art, a lightweight fastener is described in EP 2318725 B1 as an example of the above-mentioned situation, the fastener comprising a threaded body with a longitudinal axis; structural beams, a tightening area, three lugs with an angle of approximately 0, 120 and 240 degrees around the longitudinal axis of the threaded body; a tightening and a loosening area adapted to engage a standard hexagonal head tool; and three concave surfaces extending between two adjacent lugs from the three lugs.

US 10,302,119 B2 describes a fastener comprising a body part having a first end and a second end disposed away from the first end, a lower periphery adjacent the second end of the body part, an upper periphery disposed away from the lower periphery, and a head part having a body extending between the lower periphery and the upper periphery. The head part of the said fastener is designed to engage a standard hexagonal socket and its lower periphery is hexagonal and its upper periphery is different from the lower periphery and therefore different from the hexagon.

EP 3330551 B1 describes a lightweight and high-strength fastener having both an outer contour passing into the drive system and an inner contour passing into the drive system, with pocket-shaped sections in the inner contour passing into the drive system. Thanks to this special design of the fastener, it can be applied with standard systems.

The TW201226725A patent application relates to a novel fastener system designed to meet anti-disassembly requirements in specialized mechanical assemblies. The invention comprises three key components: a fastener, a matched driving member, and a dedicated punch tool. The fastener includes a threaded portion and a disk-shaped head with a convex curved end surface, on which multiple dismounting grooves are radially arranged near the periphery. These grooves are uniquely designed so that they do not connect with each other, thereby preventing engagement with standard tools such as Phillips or flat-blade screwdrivers. A custom driving member is provided with multiple protruding driving teeth that precisely match the geometry of the dismounting grooves, enabling efficient torque transfer and high drive efficiency while maintaining a zero-degree driving angle. Additionally, a specialized punch is used to form the fastener head and its grooves during manufacturing. This configuration ensures that the fastener is resistant to unauthorized disassembly while still being easily engaged and disengaged using the custom driver. The arrangement also reduces stress concentration and wear, extending the service life of the components.

The US2180633A patent application discloses an improved screw head designed to enhance driving engagement and resist tampering or unauthorized removal. The invention features screw heads with a plurality of radial slots extending from a central, unrecessed surface portion. These slots are carefully configured with parallel side walls and downward-sloping bottom walls, offering superior engagement with a complementary driving tool that includes correspondingly shaped lugs. This specialized configuration prevents the use of standard screwdrivers and minimizes slippage during torque application. Various head styles are illustrated-round, flat, oval, and binding-with the slot design adapted to each geometry. In certain embodiments, the slots terminate before the peripheral edge to maintain a continuous outer contour, while in others, the slots extend fully to the underside of the screw head for enhanced engagement. The slot geometry also facilitates centering of the tool and maximizes leverage, thereby improving rotational efficiency and durability. Overall, the design enables high-precision manufacturing, secure tool fit, and effective torque transfer, fulfilling the need for tamper-resistant yet efficiently operable screw fasteners.

The US2015878A patent application presents a coupling and driving device specifically designed to enhance the alignment, gripping, and torque transmission between a rotary driver and a screw, particularly in high-speed assembly contexts using self-tapping screws. The invention features a rotatable driving device with multiple radially arranged coupling ribs that interlock with corresponding radial recesses in the screw head. These ribs are either resiliently bifurcated or combined with adhesives to temporarily but effectively secure the screw against longitudinal displacement during insertion. Several configurations are described, including self-aligning bifurcated driving elements that snap into engagement, adhesive-filled sockets for retention, and asymmetric rib arrangements to eliminate backlash and slippage. Central pilot sections facilitate accurate alignment while ensuring the axial force is evenly distributed. The system supports both flat and round screw heads and addresses common issues in conventional slotted screw applications-such as slippage, tilting, and the need for manual guidance-by enabling one-handed, secure, and efficient screw driving. The invention proves particularly effective for high-throughput production environments where rapid and precise screw insertion is critical.

The US3411555A patent application describes an advanced screw driving tool optimized for high-torque transmission, self-centering engagement, and alignment stability during screw installation. The invention consists of a screw driver featuring a shank and an enlarged head portion terminating in a chamfered annular ring. Within the head is a central planar protrusion surrounded by multiple radially extending ribs, each having sloped end surfaces and angled side profiles. These ribs define segmentally concave recesses between them, allowing the screw driver to securely engage mating slots in a screw head. The geometry enables maximum contact area and torque transmission during clockwise rotation, while the angled slopes ensure smoother disengagement in reverse. The concavity and chamfering facilitate easy alignment and entry of the screw, even when the driver and screw axes are not perfectly aligned. An alternative blade-type configuration is also disclosed, featuring dovetailshaped angled surfaces for similarly optimized torque transfer. Designed for both manual and power-driven applications, this tool significantly improves driving efficiency and reduces the risk of misalignment or slippage compared to conventional flat-blade drivers.

The part of a standard drive that externally grips the head part of the fastener to transfer torque and is compatible with the head shape of the fastener is dimensionally slightly larger than the head part so that it can easily grip the head part. This causes the tool to turn slightly idle before coming into contact with the fastener for the initial actuation. When the tool continues to rotate, the surface of the part of the tool that grips the fasteners makes a point contact by contacting the corners of the fastener and if the torque application continues, these parts of the fastener may be damaged.

Stripping problems may occur when the standard drive apparatus, which grips the fastener externally to tighten or loosen the fasteners with the hexagonal head part designed for weight reduction, continues to apply torque. There may be a problem of stripping due to the fact that the user of the drive apparatus cannot align the drive apparatus with the axis of the fastener, and that the drive apparatus cannot contact a sufficiently large surface area in the fastener to apply an effective torque. The torque required for tightening and loosening the fastener cannot be transferred to the fastener by the drive apparatus and the operation cannot be carried out as required in the event of a stripping problem. However, since deformation occurs in the head part of the fastener due to stripping, there is a loss in the active contact area where the drive apparatus contacts and a connection cannot be made in which the desired locking is achieved. It is desirable to avoid stripping until reaching the desired torque and/or locking load in an effective fastener design. In addition, the problem of stripping of the fastener limits the number of use of the said fastener in cases where repeated disassemblyassembly procedures are required at service points.

The person using the drive apparatus that grips the fastener externally should also pay attention to center the fastener in order to perform the tightening process quickly without damaging the fastener and causing the problem of not being able to tighten due to stripping in order to apply torque to the fastener with the hexagonal head part. Otherwise, problems such as locking, stripping, deformation of the system, and falling of the fastener may occur during the assembly of the fastener. Cases where the fastener cannot be properly centered also lead to serious work safety problems in the assembly lines. The drive apparatus may fall quickly from the hand of the operator making the connection or may be ejected due to angular movement. Furthermore, it causes a loss of time and can reduce the efficiency when assembling a plurality of fasteners in succession. This situation, which is experienced during torquing, gains more importance, especially in robotic applications.

Since fasteners that can be tightened with a standard drive apparatus are also open to the intervention of persons other than authorized persons, problems in terms of safety and security are likely to be encountered. Meanwhile, when there is a problem with the fastener, it may cause the problem to not be solved or to be solved in a longer time because it can be intervened by inexperienced people before professional support.

There is a need for a lightweight fastener that overcomes the above problems in the art and a drive apparatus that is compatible with the design of this fastener considering the above. In more detail, a fastener that enables the effective transfer of the torque applied by the drive apparatus during tightening and loosening and a drive apparatus that is compatible with this fastener and allows the fastener to be self-centered are needed, in addition to the fact that a greater amount of weight reduction can be realized with this head shape compared to the traditional methods unlike the traditional methods applied in weight reduction in fasteners with a hexagonal head part.

### Summary of the Invention

The main object of the invention is to provide a lightweight fastener with an improved head shape, a drive apparatus customized for tightening and loosening this fastener, and a combination of fastener - drive apparatus in order to overcome the aforementioned disadvantages in the known state of the art.

Another object of the invention is to provide a fastener in which the applied torque is effectively transferred, in addition to being less weighted than the fasteners with a conventional hexagonal head part thanks to the improved head shape.

Another object of the invention is to provide a lightweight fastener with an improved head part with contact zones that enable effective transfer of the torque applied by the drive apparatus during tightening and loosening operations.

Another object of the invention is to provide a lightweight fastener that allows the realization of connections that do not experience stripping problems until reaching the desired torque and/or locking load during assembly and thus can achieve the desired locking for an effective connection.

Another object of the invention is to provide a lightweight fastener that provides a cost advantage as a result of using less raw material than the fasteners with a traditional hexagonal head part in the head part and preventing the use of unnecessary raw material. Another object of the invention is to provide a drive apparatus that applies torque to the fastener for tightening and loosening the fastener developed to achieve the aforementioned purposes.

Another object of the invention is to provide a drive apparatus that is compatible with the developed lightweight fastener and allows the assembly of the system achieved by eliminating the problems of the system that can be encountered during assembly such as locking, stripping, deformation, and falling of the fastener thanks to the self-aligning of the fastener.

Another object of the invention is to provide a drive apparatus that enables repeated use of the fastener without any problem in cases where repeated disassembly and assembly of the lightweight fastener is required.

Another object of the invention is to provide a combination of fastener and drive apparatus that performs the above objects, in which a safe and robust connection is formed, in which the torque effective for tightening and loosening a lightweight fastener is applied as required.

The fastener according to the invention is described in appended claim 1.

The head part of the fastener according to the invention and thus the periphery of the head can have any shape, but is preferably circular. The head part is located above the flange part and the perimeter of the flange and the perimeter of the head are aligned.

The fastener according to the invention can be any externally threaded fastener such as bolts, screws, and preferably bolts.

There is a side wall on both sides of each support element in the head of the fastener according to the invention, and each side wall includes an upper edge and a lower edge. The upper edge and the lower edge on any side wall of each support element are closest to each other in line with the periphery of the head and gradually move away from each other towards the center, so that the height of the support element increases from the periphery of the head to the head center. The support elements extending radially from the periphery of the head to the center have a minimum height in line with the periphery of the head and reach the maximum height in the center where all three support elements meet. The minimum and maximum heights of all the support elements are equal to each other according to the preferred embodiment of the invention.

According to an embodiment of the invention, the upper edges on each side wall of the support elements extend from the periphery of the head to the center by making the same angle with the horizontal.

According to the invention, the width of each of the support elements gradually decreases from the periphery of the head towards the center. According to a preferred embodiment of the invention, the maximum widths of the support elements in the fastener at the level of the head periphery and the widths of the support elements extending radially towards the center at a certain distance from the center (i.e. a certain radius from the center) are also the same. The side walls on both sides of each support element are farthest from each other in line with the periphery of the head, and the side walls gradually approach each other while the support elements extend radially towards the center. Thus, while the upper edges of each side wall on both sides of the support elements are gradually approaching each other from the periphery of the head towards the center, the lower edges, which are axially aligned with them, are gradually approaching each other towards the center, and thus the width of the support element decreases as it extends from the periphery of the head towards the center.

An arc-shaped intermediate wall is formed by bending and joining the side wall towards the opposite side wall to form an arc as the side walls of the two successive support elements facing each other extend radially towards the center.

According to a preferred embodiment of the invention, the upper edge and the lower edge of each side wall are axially aligned in the support elements and the lower and upper edge in each side wall extend axially in line from the periphery to the center of the head.

According to an embodiment of the invention the head of the fastener is located adjacent and above the flange and the support elements are located above the flange. The lower surface of the flange part is located on the horizontal plane, while the upper surface extends radially from the periphery of the flange to the center in an inclined way. The bottom surface of the grooves between the support elements located at the top of the flange and the top surface of the flange are the same. Therefore, while the upper surface of the flange part extends radially inclined from the periphery of the flange to the center of the head, the base of the groove part extends radially from the periphery of the head to the center at the same incline.

According to an embodiment of the invention, since the support elements are located on the upper surface of the flange, the lower surface of the support elements and thus of the side walls on both sides of each support element also extend radially towards the center of the head with the same inclination as the upper surface of the flange. Accordingly, the angle of the upper surface of the flange with the horizontal axis as it extends radially from the periphery of the flange towards the center is the same as the angle of each lower edge of the side walls of the support element with the horizontal axis as it extends from the periphery of the head towards the center.

According to an embodiment of the invention, each of the upper edges of the side walls of the support element extends in a radially inclined manner towards the center by making the same angle with the horizontal. The angle of each upper edge of the side walls of the support elements with the horizontal axis is greater than the angle of each lower edge of the side walls of the support elements with the horizontal axis.

The drive apparatus transfers the torque by contacting the active contact surfaces formed by the side walls and the intermediate walls connecting the side walls of the support elements during tightening and loosening of the fastener. The angle made by the upper edges and lower edges of the side walls with the horizontal plane affecting the size of the area of the active contact surfaces as well as the number of support elements is of critical importance.

In the fastener according to the invention, the angle of the upper surface of the flange and therefore the angle of each lower edge on the side walls of each support element located on the upper surface of the flange, while radially extending from the periphery of the head to the center, with the horizontal axis is 0° to 45°, preferably 1° to 30°, more preferably 2° to 20°.

In the fastener according to the invention, the angle of each upper edge on the side walls of each support element, while upper edge extending radially from the periphery of the head to the center, with the horizontal axis is 5° to 75°, preferably 10° to 60°, more preferably 12° to 45°, most preferably 15° to 35°.

The angles between the side walls of any two successive support elements facing each other in the fastener according to the invention may also be different from each other, or preferably at least two of them may be equal to each other and the other may be different. According to the preferred embodiment of the invention, the angles between the side walls of any two successive support elements facing each other are equal and are 50° to 105°, preferably 60° to 100°, more preferably 70° to 95°.

The fastener according to the invention preferably has three support elements, and the longitudinal axes of these support elements intersect at the center of the head. The longitudinal axes of the support elements are defined as the radially extending lines passing through the center of the head along the support element. The angles between the longitudinal axes of two successive support elements may be different from each other, or preferably at least two of them may be equal to each other and the other may be different. According to the preferred embodiment of the invention, the angles between the longitudinal axes of two successive support elements are equal to each other and are 120°.

The active contact zones in the fastener according to the invention allow the torque applied by the drive apparatus to be transmitted regionally and homogeneously and thus to perform an effective tightening and loosening process, unlike the application of the torque to the fastener from the point contact zones to tighten or loosen the fasteners with the hexagonal head part by the traditional drive apparatus.

The disassembly and assembly of the lightweight fastener according to the invention, which is specifically designed to make it possible to transfer the torque applied to the head part in a homogeneous manner, is carried out by the drive apparatus specially designed for the fastener.

The drive apparatus according to the invention is described in appended claim 9.

The depth of the slots extending radially towards the center of the drive apparatus according to the invention is minimal when they are in line with the periphery of the head and increases towards the center for a fully compatible coupling with the support elements. The height of the support elements of the fastener according to the invention extending radially towards the center increases from the periphery of the head to the center, while the depth of the slots in the drive apparatus also increases from the periphery of the head to the center for a exactly compatible engagement with the support elements.

The head part of the drive apparatus according to the invention and thus the periphery of the head can have any shape, but is preferably circular.

It is seen that the slots and protrusions are inclined from the periphery of the head towards the center when the drive apparatus according to the invention stands on the horizontal plane when the outer edges of the protrusions in the head part of the drive apparatus contact the horizontal plane. According to the preferred embodiment of the invention, the angle of the base of the slots in the head of the drive apparatus with the horizontal plane is equal to the angle of the upper edges of the support elements in the head of the fastener.

When the fastener and the drive apparatus according to the invention are engaged together, the side walls and the intermediate walls connecting these side walls forming the active contact surfaces in the fastener are opposite to the side walls on both sides of the protrusions in the drive apparatus and the intermediate walls connecting these side walls. Therefore, the side walls on both sides of the said protrusions in the drive apparatus according to the invention and the intermediate walls connecting these side walls also form the active contact surfaces where the torque is transferred from the drive apparatus to the fastener. As a result of bending and orientation of the side walls on both sides of each protrusion on the head of the drive apparatus towards each other to form an arc of a circle, they form arc-shaped intermediate walls.

The angle between the longitudinal axes of any two successive support elements is equal to the angle between the longitudinal axes of the two successive slots through which the said support elements engage in the drive apparatus in accordance with the invention, since the slots in the drive apparatus and the support elements in the fastener should engage tightly together in order to effectively transfer the torque applied by the drive apparatus to the fastener in accordance with the invention. The longitudinal axes of the slots in the head of the drive apparatus are defined as the lines extending radially from the center of the head through the center of the slot along said slot. According to another embodiment of the invention, at least two of the angles between the longitudinal axes of two successive slots in the drive apparatus according to the invention may be equal to each other and the other may be different. According to a preferred embodiment of the invention, the angles between the longitudinal axes of two successive slots in the head of the drive apparatus are equal to each other and are 120°.

The angle between the side walls of each protrusion in the drive apparatus according to the invention may be different from the angles between the side walls of the other protrusions, or the angle between the side walls of the at least two protrusions may be the same. According to the preferred embodiment of the invention, the angle between the side walls of each protrusion is equal to the angles between the side walls of the other protrusions and is 50° to 105°, preferably 60° to 100°, more preferably 70° to 95°.

The width of the grooves in the drive apparatus according to the invention, where the support elements in the fastener according to the invention are coupled, decreases as the grooves extend radially from the periphery of the head towards the center. According to a preferred embodiment of the invention, the maximum widths of the grooves in the drive apparatus at the level of the head periphery and the widths of the grooves extending radially towards the center at a certain distance from the center (i.e. a certain radius from the center) are also the same.

In the present invention, the term "horizontal plane" refers to the plane that represents the independent variable that is assumed to extend forever from left to right, forming the horizontal dimension in the measurement of angle values.

In the present invention, the term "periphery", more specifically the term "periphery of the head" refers to the outer margin of the head parts of the fastener or drive apparatus.

### Brief Description of the Figures

References to the following figures and detailed descriptions are intended to provide a better understanding of the invention and have no purpose limiting the scope of the invention. The components in the figures were not scaled, only the description of the principles of the invention was emphasized. Different modifications of the parts of the figures represented by references are also possible within the scope of the invention.
Figure 1: The perspective view of the fastener in accordance with the invention is given.
Figure 2: A front vertical view of the fastener in accordance with the invention is given.
Figure 3: A side view of the head of the fastener according to the invention is given.
Figure 4: A cross-sectional view of the head of the fastener according to the invention is given.
Figure 5: The top view of the fastener according to the invention is given.
Figure 6: A perspective view of the drive apparatus in accordance with the invention is given.
Figure 7a: A view of the longitudinal section of the holding apparatus according to the invention located vertically on the horizontal plane (Y) is given.
Figure 7b: A view of section A-A shown in Figure 7a of the holding apparatus according to the invention located vertically on the horizontal plane (Y) is given.
Figure 8: A top view of a drive apparatus according to the invention is given.
Figure 9: A view of the combination of the fastener and drive apparatus in accordance with the invention is given.

### Detailed Description of the Invention

The present invention relates to a lightweight fastener that can be applied with a uniquely designed drive apparatus, and that can be fastened at the desired safety and performance. The present invention also relates to a drive apparatus that applies the torque required for effective tightening and loosening of this fastener and to a combination of said fastener and this drive apparatus.

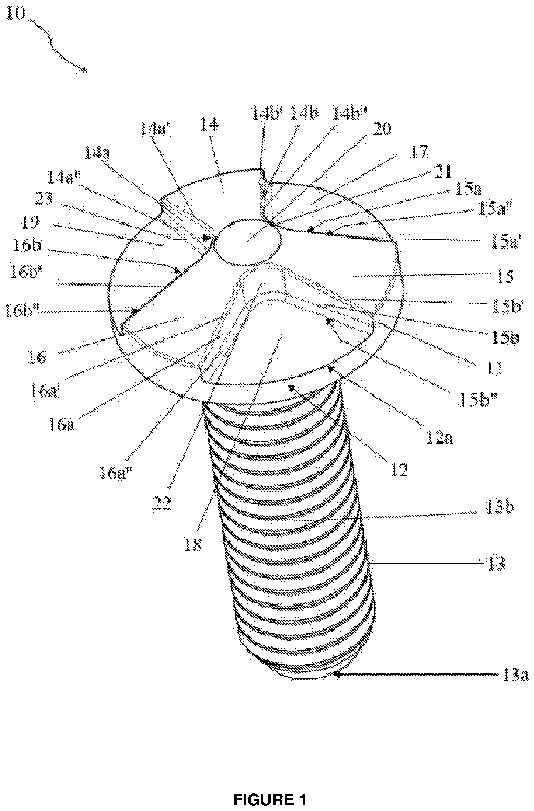

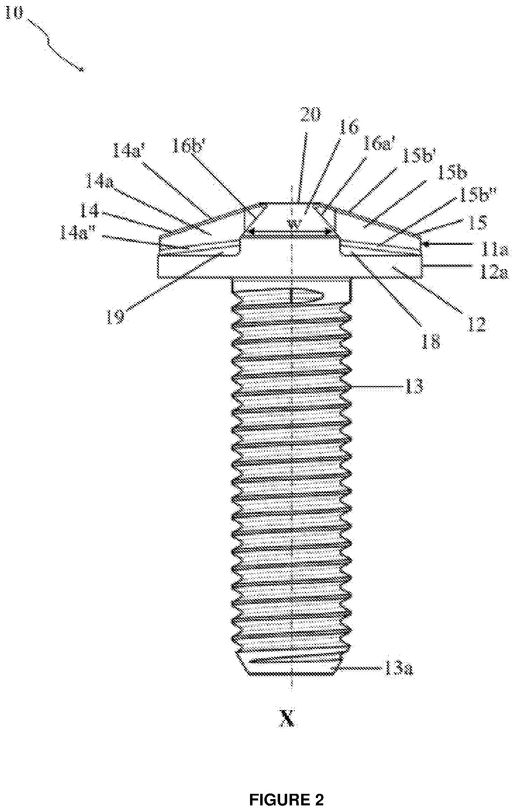

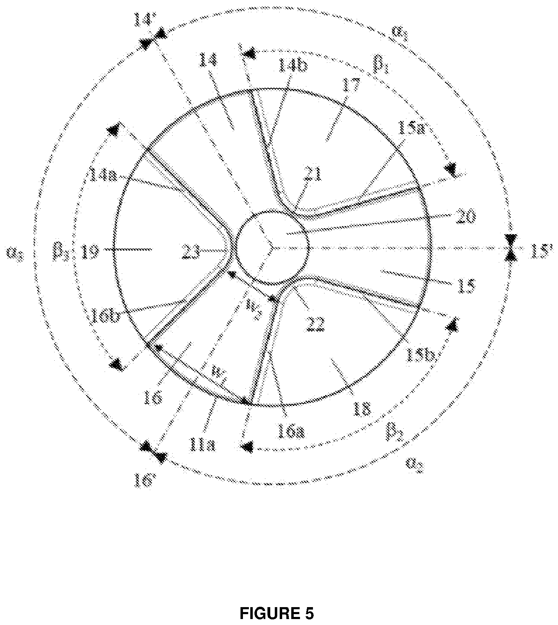

The fastener (10) according to the invention mainly comprises the head (11), flange (12) and shaft (13) as seen in Figure 1. The shaft part (13) is located adjacent to the flange part (12) and extends along the axis of the fastener (10) from the base of the flange part (12) to the end (13a) of the shaft. The end (13a) of the shaft part is preferably flat but can also be in different shapes. There is a threaded part (13b) that extend helically around the shaft part (13) of the fastener (10). The threaded part (13b) helps the torque applied fastener (10) to engage and stay properly in the workpiece. According to an embodiment of the invention shown in Figure 1, the head part (11) above the flange part (12) of the fastener (10) consists essentially of a periphery (11a), a center (20), three support elements (14, 15, 16), and grooves (17, 18, 19) between two successive support elements. The support elements (14, 15, 16) are separated from each other by the grooves (17, 18, 19). There is a groove (17, 18, 19) between the three successive support elements (14, 15, 16) as can be seen from the view of the fastener in Figure 1. The longitudinal axes (14', 15', 16') of the support elements intersect at the center part (20) of the head extend radially from the center (20) of the head of the fastener. The longitudinal axes (14', 15', 16') of the support elements are defined as the lines extending radially from the center of the head (20) through the center of the support element (14, 15, 16) along the support element (Figure 5). Figure 2 shows a front vertical view of the fastener (10) through which the longitudinal axis (X) of the fastener passes through the center (20) of the head.

The head (11) comprising the support elements (14, 15, 16) and the grooves (17, 18, 19) between the two successive support elements has a circular periphery (11a), and according to a preferred embodiment of the invention, the flange (12) on which the head is located is also circular, and the periphery (12a) of the flange is in line with the periphery (11a) of the head. The support element (14, 15, 16), which extends from the center of the head (20) radially towards the periphery (11a) of the head decreasing in height, ends when it is aligned with the periphery (11a) of the head as seen in Figure 2. There is a side wall (14a, 14b; 15a, 15b; 16a, 16b) on both sides of the support elements (14, 15, 16), as shown in Figure 1. These side walls form the boundary between the adjacent groove (17, 18, 19) and the support elements (14, 15, 16). However, the side walls (14a, 14b, 15a, 15b, 16a, 16b) on both sides of the support elements (14, 15, 16) have upper edges (14a', 14b', 15a', 15b', 16a', 16b') and lower edges (14a", 14b", 15a", 15b", 16a", 16b"). The upper edge and the lower edge (14a', 14a"; 14b', 14b"; 15a', 15a"; 15b', 15b"; 16a', 16a"; 16b', 16b") in each side wall (14a, 14b, 15a, 15b, 16a, 16b) extend axially in line from the periphery (11a) of the head to the center (20). The upper edge and the lower edge (14a' and 14a"; 14b' and 14b"; 15a' and 15a"; 15b' and 15b"; 16a' and 16a"; 16b' and 16b") on any side wall of each support element (14, 15, 16) are closest to each other in line with the periphery (11a) of the head and gradually move away from each other towards the center (20), so that the height of the support element increases from the periphery (11a) of the head towards the head center (20). It is shown in the side walls of the two support elements (14, 15) seen in Figure 2 that the upper and lower edges (14a' and 14a"; 15b' and 15b") on each side wall are closest to each other in line with the periphery (11a) of the head, move away each other towards the center (20), and thus the height of the support element increases from the periphery (11a) of the head to the head center (20). The situation described by example in Figure 2 applies to the upper and lower edges (14a' and 14a"; 14b' and 14b"; 15a' and 15a"; 15b' and 15b"; 16a' and 16a"; 16b' and 16b") of each side wall of all the support elements (14, 15, 16) in the head, respectively.

However, it is seen in Figure 2, where different view of the support elements (14, 15, 16) in the head (11) of the fastener in accordance with the invention that the support elements (14, 15, 16) extend towards the center (20) with a certain inclination. However, it is clearly seen in Figure 2 that the upper edge and the lower edge (14a' and 14a"; 15b' and 15b") of each side wall of the two support elements (14, 15) are axially aligned. The upper edges (14a' and 14b'; 15a' and 15b'; 16a' and 16b') of each side wall on both sides of the support elements (14, 15, 16) gradually approach each other from the periphery (11a) of the head towards the center (20), while the lower edges (14a" and 14b"; 15a" and 15b"; 16a" and 16b"), which are axially aligned with each other, are gradually approaching each other towards the center (20), and thus the width (w) of the support element (14, 15, 16) decreases as it extends from the periphery (11a) of the head towards the center (20) as can be clearly seen in Figures 1 and 2.

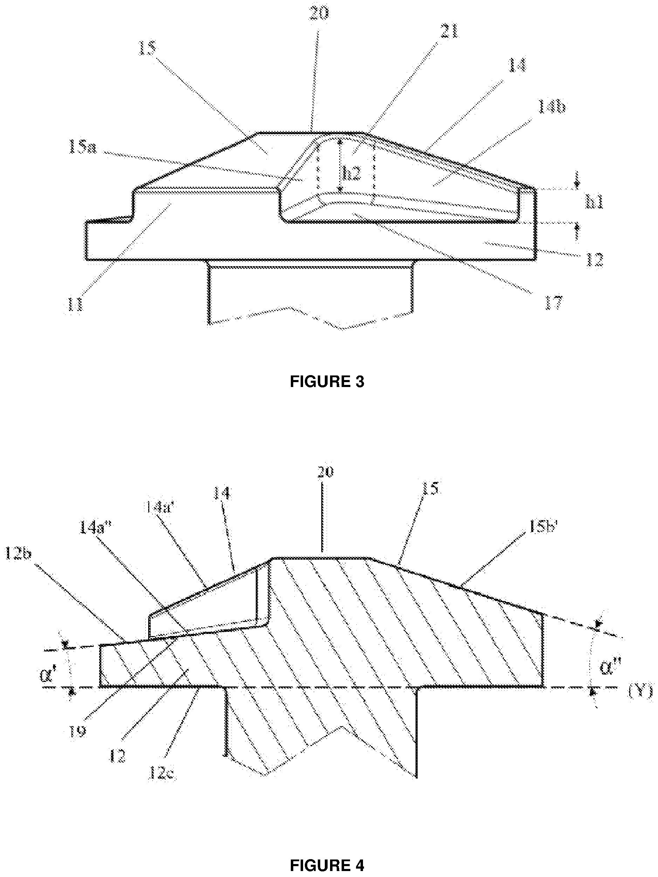

The side walls (14b, 15a) of the two successive support elements (14, 15) are connected to each other by an intermediate wall (21). As the side walls (14b, 15a) of the two successive support elements (14, 15) facing each other extend radially towards the center (20), they begin to bend towards the opposite side wall (14b, 15a) after a certain point to form an arc of a circle. It is seen in Figure 3 that as a result of bending and orientation of both side walls (14b, 15a) towards each other to form an arc of a circle, they form an arc-shaped wall (21) by joining at the closest point to the center (20). The part where the side walls (14b, 15a) facing each other of the two successive support elements (14, 15) begin to bend towards the opposite side wall while extending radially is shown in Figure 3 by dashed lines. These dashed lines represent the boundary of each side wall (14b, 15a) with the intermediate wall (21). The intermediate wall (21) extends between these boundaries on the side walls (14b, 15a) facing each other of two successive support elements. The bending of the side walls (14b, 15a) facing each other of the two successive support elements (14, 15) to form the intermediate wall (21) as described above also takes place between the opposite side walls (14b and 15a; 15b and 16a; 16b and 14a) of all successive support elements (14, 15, 16) in the head part (11) of the fastener of the invention (Figure 1).

However, the support elements (14, 15, 16) extending radially inclined from the periphery (11a) of the head to the center (20) have a minimum height (h₁) in line with the periphery (11a) of the head and reach the maximum height (h₂) in the center (20) where all three support elements (14, 15, 16) meet. The maximum height of the support elements (14, 15, 16) is equal to the maximum height of the intermediate walls (21, 22, 23). According to the preferred embodiment of the invention, the minimum and maximum heights of all the support elements (14, 15, 16) are equal to each other.

The side walls (14b and 15a; 15b and 16a; 16b and 14a) of both successive support elements facing each other and the intermediate walls (21, 22, 23) connecting these side walls respectively form the active surfaces in which the drive apparatus (40) contacts the fastener (10) for tightening and loosening the fastener (10) and transfers the torque required for performing these operations in the fastener in accordance with the invention. Active surfaces are critical for effective transfer of the torque applied by the drive apparatus (40) to the fastener (10) and for tightening and loosening without encountering any problems such as stripping, deformation, locking.

According to another embodiment of the invention, it is seen in Figure 4 that while the lower surface (12c) of the flange part (12) under the head (11) of the fastener is located in a horizontal plane, the upper surface (12b) is radially inclined towards the center (20). The support elements (14, 15, 16) in the head part (11) of the fastener are located on the upper surface (12b) of the flange part. The boundaries of the groove part (17) between the two successive support elements (14, 15) are determined by the side walls (14b, 15a) of the support elements (14, 15) and the intermediate wall (21) that allows these side walls (14b, 15a) to merge, and the depth of the groove increases inclined with the height of the side walls (14b, 15a) and the intermediate wall (21) as clearly seen in Figure 3. Meanwhile, since the support elements (14, 15) are located on the upper surface (12b) of the flange part, the part on the upper surface (12b) of the flange part bounded by the side walls (14b, 15a) and the intermediate wall (21) also forms the base of the groove part (17). Accordingly, the upper surface (12b) of the flange part and the base of the groove part (17) are actually the same surface. Therefore, while the upper surface (12b) of the flange part extends radially inclined from the periphery (12a) of the flange to the center (20) of the head, the base of the groove part (17) extends radially to the center (20) of the head with the same inclination.

However, since the support elements (14, 15, 16) are located on the upper surface (12b) of the flange, the lower surface of the support elements (14, 15, 16) and thus the lower edges (14a", 14b", 15a", 15b", 16a", 16b") of the side walls on both sides of each support element are also seen in Figures 1, 2, 3 and 4 to extend radially towards the center of the head with the same inclination as the upper surface of the flange. Accordingly, the angles (α') of the upper surface (12b) of the flange, the base of the groove (19) and the lower edge (14a") of the support element with the horizontal plane (Y) as they extend radially towards the center are identical as clearly seen in the left part of Figure 4. This situation explained with the example in Figure 4 is also the same for the lower edges (14a", 14b", 15a", 15b", 16a", 16b") of the side walls of the other support elements and the base of the grooves (17, 18, 19) between the two successive support elements, and the angle (α') of all the lower edges and the angle (α') of the bases of groove parts (17, 18, 19) with the horizontal plane as they extend radially from the periphery of the head (11a) to the center (20) is the same as the angle (α') of the upper surface of the flange with the horizontal plane.

The upper edges (14a', 14b', 15a', 15b', 16a', 16b') of the support elements also extend in a radially inclined manner towards the center (20), by making a certain angle with the horizontal plane (Y) in the fastener (10) according to the invention. Accordingly, in the fastener (10) according to the invention, each of the upper edges (14a', 14b', 15a', 15b', 16a', 16b') of the side walls of the support elements extends in a radially inclined manner towards the center (20) by making an angle (α") with the horizontal plane, as well as each of the lower edges (14a", 14b", 15a", 15b", 16a", 16b") of the side walls of the support elements adjacent to the upper surface (12b) of the flange, thus the upper surface (12b) of the flange extends in a radially inclined manner towards the center by making an angle (α') with the horizontal.

The angle (α") of each upper edge (14a', 14b', 15a', 15b', 16a', 16b') on the side walls of the support elements with the horizontal plane is the same, similarly, the angle (α') of each lower edge (14a", 14b", 15a", 15b", 16a", 16b") on the side walls of the support elements with the horizontal plane is the same. As shown in Figure 4, the angle (α") of the upper edge (15b') of the side wall of the support element (15) with the horizontal plane is greater than the angle (α') of the lower edge (14a") of the side wall of the support element (14) with the horizontal plane.

Considering that the drive apparatus (40) transfers the torque by contacting the active contact surfaces formed by the side walls (14a, 14b, 15a, 15b, 16a, 16b) of the support elements and the intermediate walls (21, 22, 23) that enable the joining of the side walls, besides the number of the support elements, the angle of the upper edges (14a', 14b', 15a', 15b', 16a', 16b') and the lower edges (14a", 14b", 15a", 15b", 16a", 16b") of the side walls with the horizontal plane which affects the size of the area of the active contact surfaces is of critical importance. While the weight of the fastener is significantly reduced, the active contact surface areas are optimized in such a way that the required torque is effectively transferred by the drive apparatus (40) and the removal and fastening processes are carried out repeatedly without any problems such as stripping, deformation and locking in the design of the fastener (10) in accordance with the invention.

In the fastener (10) according to the invention, the angle (α') of the upper surface (12b) of the flange, and thus of each lower edge (14a", 14b", 15a", 15b", 16a", 16b") on the side walls of each support element located above the upper surface (12b) of the flange, while radially extending from the periphery of the head (11a) to the center (20), with the horizontal plane is 0° to 45°, preferably 1° to 30°, more preferably 2° to 20°.

In the fastener according to the invention, the angle (α") of each upper edge (14a', 14b', 15a', 15b', 16a', 16b') on the side walls of each support element extending radially from the periphery of the head (11a) to the center (20) with the horizontal plane is 5° to 75°, preferably 10° to 60°, more preferably 12° to 45°, most preferably 15° to 35°.

The shapes of the support elements (14, 15, 16) in the head part of the fastener of the invention as described above as well as the number of the support elements (14, 15, 16) and their positions relative to each other are among the factors to be considered for self-aligning and performing an assembly or a disassembly process at the desired performance while applying torque by the drive apparatus (40).

There are 2 to 6, preferably 2 to 4, more preferably 3 support elements (14, 15, 16) in the head part (11) of the fastener according to the invention.

According to an embodiment of the fastener (10) of the invention, it is shown in Figure 5 that the longitudinal axes (14', 15', 16') of the support elements extend radially from the center (20) of the head along the support element (14, 15, 16). The angles between the longitudinal axes (14', 15', 16') of the support elements can be equal or different from each other. According to another embodiment of the invention, at least two of these angles are equal to each other and the other may be different from them. According to a preferred embodiment of the invention shown in Figure 5, there are three support elements (14, 15, 16) in the head part of the fastener, and the angles between the longitudinal axes (14', 15', 16') of any successive support element are equal to each other. In more detail, when we refer to the support elements as the first support element (14), the second support element (15) and the third support element (16), the angle (α₁) between the longitudinal axis (14') of the first support element and the longitudinal axis (15') of the second support element, the angle (α₂) between the longitudinal axis (15') of the second support element and the longitudinal axis (16') of the third support element, the angle (α₃) between the longitudinal axis (16') of the third support element and the longitudinal axis (14') of the first support element is equal to each other and all are 120° (α₁= α₂= α₃).

As shown in Figure 5, in the fastener (10) of the invention, the side walls (14b and 15a; 15b and 16a; 16b and 14a) facing each other of the two successive support elements (14 and 15; 15 and 16; 16 and 14) and the intermediate wall (21, 22, 23) connecting these side walls limit the region of the grooves (17, 18, 19) between the two support elements. The width (w) of the support elements also narrows towards the center (20) starting from the periphery (11a) of the head. Each of the support elements (14, 15, 16) extends radially from the periphery (11a) of the head to the center (20) of the head and intersect in the center (20). While the width (w₁) of each support element (14, 15, 16) in line with the periphery (11a) of the head is maximum, its width gradually decreases as it extending from the periphery (11a) of the head to the center (20) (w₂<w₁). According to a preferred embodiment of the invention, the maximum width (w₁) of the support elements (14, 15, 16) at the level of the head periphery (11a) and the width (w₂) of the support elements (14, 15, 16) extending towards the center (20) at a certain distance from the center (i.e. a certain radius from the center) are also identical. Accordingly, the side walls (14a and 14b; 15a and 15b; 16a and 16b) of each support element are farthest from each other in line with the periphery (11a) of the head, and the side walls (14a and 14b; 15a and 15b; 16a and 16b) are gradually approaching each other while the support elements (14, 15, 16) extending radially towards the center (20). However, Figure 5 shows that the upper edge and lower edges (14a' and 14a"; 14b' and 14b"; 15a' and 15a"; 15b' and 15b"; 16a' and 16a"; 16b' and 16b") on each side wall of the support element are vertically aligned and extending radially in an aligned manner towards the center.

In the fastener (10) of the invention, the angles (β₁, β₂, β₃) between the side walls (14b and 15a; 15b and 16a; 16b and 14a) of any two successive support elements may vary depending on the angle (α₁, α₂, α₃) between the longitudinal axes of said support elements and the width (w) of the support elements, but are equal to each other according to the preferred embodiment of the invention (β₁=β₂=β₃) and are 50° to 105°, preferably 60° to 100°, more preferably 70° to 95°. The angles (β₁, β ₂, β₃) between the side walls (14b and 15a; 15b and 16a; 16b and 14a) of the two successive support elements facing each other are shown in Figure 5, respectively.

It is seen in Figures 2, 3 and 5 that the support elements (14, 15, 16) start from the line with the head periphery (11a), which is the farthest edge to the center (20) of the head, and extend towards the center (20) by narrowing and increasing in height. Within the scope of the present invention, the head periphery (11a) may be in any particular shape, but it is circular according to a preferred embodiment of the invention. In a preferred embodiment of the invention, one end of the support elements (14, 15, 16) comprised in the fastener is in the form of an arc since it starts from the same line as the head periphery, and at this end, the support elements (14, 15, 16) have a minimum height (h₁) and their height increases as the support elements (14, 15, 16) extend radially towards the center (20). The support elements (14, 15, 16) reach their maximum height (h₂) at the point where all the support elements meet (20). According to a preferred embodiment of the invention, the minimum height (h₁) and the maximum height (h₂) of each support element (14, 15, 16) in the head part of the fastener are the same for each support element. However, as shown in Figure 5, the center of the upper and lower edge of the intermediate walls (21, 22, 23) is also axially in the same vertical line.

In the lightweight fastener (10) of the invention, the shape, features and positions of the support elements (14, 15, 16) and the grooves (17, 18, 19) in the head part are designed to ensure a homogeneous transfer of the torque applied by the drive apparatus (40) during the disassembly and assembly of the said fastener (10) to the workpiece. The drive apparatus applies torque from certain points where it contacts the fastener by engaging externally the fastener whose weight is reduced by using traditional methods including leaving the parts where only the drive apparatus contacts and transmits the torque and removing the other parts in certain proportions in order to make it possible to use a standard drive apparatus. However, the disassembly and assembly of the lightweight fastener (10) according to the invention, which is specifically designed to make it possible to transfer the torque applied to the head part in a homogeneous manner, is carried out by the drive apparatus (40) specially designed for the fastener (10).

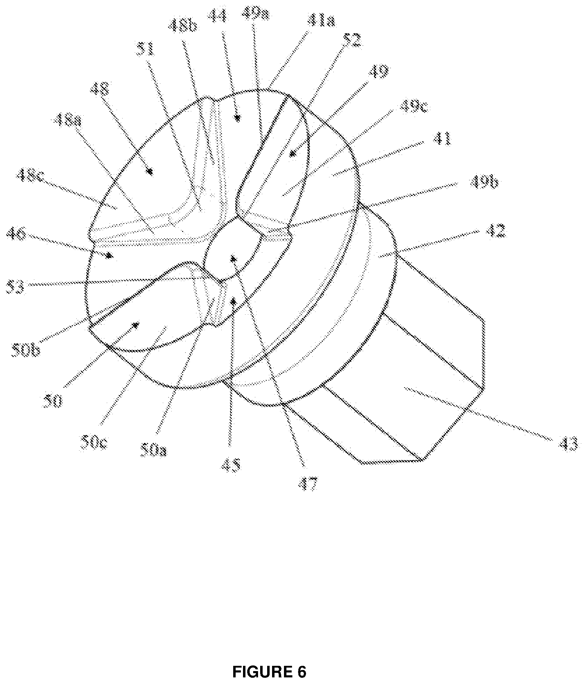

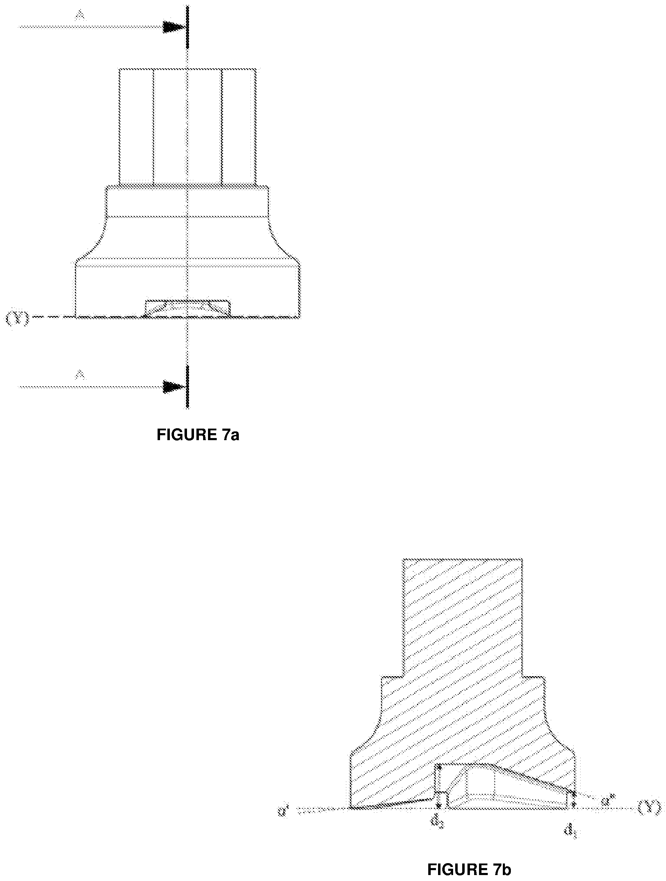

The drive apparatus (40), which is compatible with the lightweight fastener (10) in accordance with the invention and provides a homogeneous transfer of the torque applied during the tightening and loosening by contacting the active contact surfaces on the head (11) of the said fastener, is shown in Figure 6. The drive apparatus of the invention comprises mainly the head (41), the neck (42) and the holding (43) parts. The neck (42) of the drive apparatus is located between the head (41) and the holding (43) part, which provides a transition between the two parts. The head (41) of the drive apparatus is uniquely designed in such a way that the torque it applies by engaging tightly to the lightweight fastener (10) of the invention is effectively transferred homogeneously to the said fastener (10) and makes it possible for the fastener (10) to be self-centered. Accordingly, the slots (44, 45, 46) in the head part of the drive apparatus are formed to match the support elements (14, 15, 16) in the fastener and to engage tightly to the corresponding support element. There is a center (47) that overlaps the center (20) of the fastener when it engages with the fastener (10) to apply torque in the middle of the head part (41) of the drive apparatus. It has been shown in Figure 6 and Figure 7b that, while the support elements (14, 15, 16) in the fastener according to the invention extend radially inclined from the periphery of the head (11a) to the center (20) by increasing in height, the slots (44, 45, 46) through which these support elements in the head part (41) of the drive apparatus extend radially inclined from the periphery of the head (41a) to the center (47) by increasing in depth. Accordingly, the height of the support elements (14, 15, 16) of the fastener extending radially towards the center is minimum (h₁) while it is in line with the periphery (11a) of the head and it increases towards the center (20) while the depth of the slots (44, 45, 46) extending radially towards the center in the drive apparatus is minimum (d₁) while it is in line with the periphery of the head and it is the highest in the center (d₂) for a exactly compatible coupling with the support elements (14, 15, 16). The slots (44, 45, 46) in the drive apparatus start from the periphery (41a) of the head and extend radially to the center (47) and meet in the center (47) of the head. It is clearly seen in Figure 7a and Figure 7b that the slots (44, 45, 46) and protrusions (48, 49, 50) are inclined from the periphery of the head (41a) towards the center (47), where the vertical view of the drive apparatus (40) located on the horizontal plane (Y) so that the outer edges of the protrusions (48, 49, 50) in the drive apparatus contact the horizontal plane (Y). As seen in Figure 7b, the depth of the slots (44, 45, 46) also increases from the periphery (41a) of the head to the center (47).

The protrusions (48, 49, 50) formed in the drive apparatus are shown in Figure 6 so that they engage the grooves (17, 18, 19) formed between two successive support elements in the fastener (10) in accordance with the invention. The shape of these protrusions (48, 49, 50) is such that they engage tightly in the grooves (17, 18, 19) of the fastener in accordance with the invention. Accordingly, while the base of the grooves (17, 18, 19) in the fastener according to the invention extending radially towards the center (20) rises towards the center (20) by making a certain angle (α') with the horizontal plane, the upper surface (48c, 49c, 50c) of the protrusions coupling with these grooves (17, 18, 19) and extending radially towards the center (47) in the drive apparatus also extends towards the center (47) by making the same angle (α') with the horizontal plane (Y) (Figure 7b). The angle of the base of the slots (44, 45, 46) in the head of the drive apparatus according to the invention in Figure 7b with the horizontal plane is equal to the angle of the upper edges (14a', 14b', 15a', 15b', 16a', 16b') of the support elements in the head of the fastener according to the invention with the horizontal plane (α") according to a preferred embodiment of the invention.

However, when the fastener (10) and the drive apparatus (40) in accordance with the invention are engaged each other, the side walls (14a, 14b, 15a, 15b, 16a, 16b) and the intermediate walls (21, 22, 23) forming the active contact surfaces in the fastener correspond to the side walls (48a, 48b, 49a, 49b, 50a, 50b) on both sides of the protrusions (48, 49, 50) in the drive apparatus and the intermediate walls (51, 52, 53) connecting these side walls. It is seen in Figure 6 that the side walls (48a, 48b; 49a, 49b; 50a, 50b) on both sides of each protrusion (48, 49, 50) on the head of the drive apparatus form arc-shaped intermediate walls (51, 52, 53) by bending and being directed towards each other to form an arc of circle similar to the fastener (10) according to the invention. It is clearly seen in Figure 6 that the side walls (48a, 48b) on both sides of one of the protrusions (48) form the intermediate wall (51) by bending towards each other to form a circle arc while extending straight towards by approaching each other. The parts where the two side walls (48a, 48b) begin to bend towards each other to form the intermediate wall (51) are shown in dashed lines. These dashed lines represent the boundary of each side wall (48a, 48b) with the intermediate wall (51). The intermediate wall (51) extends between these boundaries on the side walls (48a, 48b) of the protrusion. The side walls (48a and 48b; 49a and 49b; 50a and 50b, respectively) on both sides of each of the protrusions (48, 49, 50) in the head part of the drive apparatus form the intermediate wall (51; 52; 53, respectively) in that protrusion by bending towards each other as described above.

In the drive apparatus (40) in accordance with the invention, the side walls (48a, 48b; 49a, 49b; 50a, 50b) and the intermediate walls (51; 52; 53) in each protrusion as mentioned above form the active contact surfaces of the drive apparatus (40), which is in contact with the fastener (10) and provides effective transfer of the torque required during the disassembly and assembly of the fastener (10). When the fastener (10) and the drive apparatus (40) are engaged in order to perform the tightening and loosening processes, the active contact surfaces in the fastener and the active contact surfaces in the drive apparatus correspond to each other. According to a preferred embodiment of the invention, the area size of the active contact surfaces in the drive apparatus (40) is at least the area of the active contact surfaces in the fastener (10) or is relatively likely to be larger for the purpose of effectively transferring the torque applied by the drive apparatus to the fastener and performing the tightening or loosening operations as required and properly.

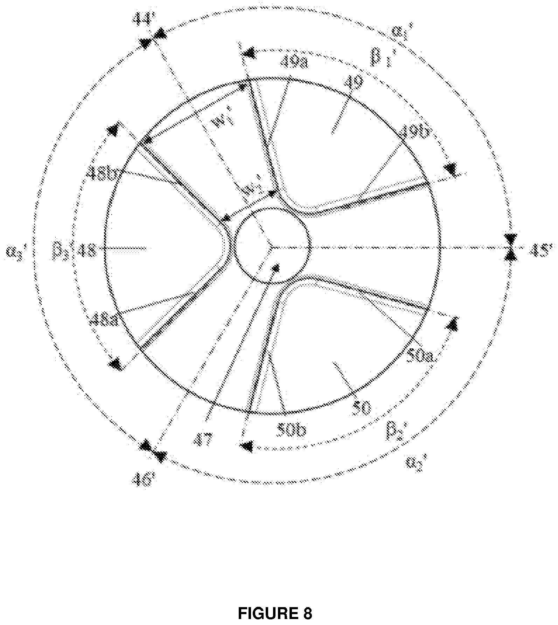

When the fastener (10) and the drive apparatus (40) of the invention are engaged each other, the support elements (14, 15, 16) in the fastener and the slots (44, 45, 46) in the drive apparatus; and the grooves (17, 18, 19) in the fastener and the protrusions (48, 49, 50) in the drive apparatus are engaged to each other. In other words, the upper surface of the support element (14, 15, 16) in the fastener is overlapped with the base of the slots (44, 45, 46) in the drive apparatus; and the base of the grooves (17, 18, 19) in the fastener is overlapped with the upper surface of the protrusions (48, 49, 50) in the drive apparatus. Accordingly, when the fastener (10) and the drive apparatus (40) in accordance with the invention are engaged each other, the longitudinal axis (14', 15', 16') of each support element in the head part of the fastener and the longitudinal axis (44', 45', 46') of the slot in which this support element corresponds and engages are overlapped. The longitudinal axes (44', 45', 46') of the slots in the head of the drive apparatus are defined as the lines extending radially from the center of the head (47) through the center of the slot (44, 45, 46) along the slot. According to a preferred embodiment of the invention, the angle between the longitudinal axes (α₁, α₂, α₃) of any two successive support elements in the head of the fastener and the angle between the longitudinal axes (α₁', α₂', α₃') of any successive slots in which these support elements correspond and engage when the drive apparatus (40) and the fastener (10) are engaged is equal to each other (α₁=α₁'; α₂=α₂'; α₃=α₃'). According to the invention, the angles between the longitudinal axes of two successive support elements can be equal to each other or different from each other. Similarly, the angles between the longitudinal axes of the slots in the drive apparatus can be equal to each other or different from each other. Accordingly, the angle between the longitudinal axes of any two successive support elements is equal to the angle (α₁', α ₂', α₃') between the longitudinal axes of the two successive slots through which the said support elements couple with in the drive apparatus in accordance with the invention, since the slots (44, 45, 46) in the drive apparatus and the support elements (14, 15, 16) in the fastener should engage tightly together in order to effectively transfer the torque applied by the drive apparatus (40) in accordance with the invention to the fastener (10). According to the preferred embodiment of the invention, there are three support elements in the head part of the fastener and the angles between the longitudinal axes (14', 15', 16') of any successive support element (α₁, α ₂, α₃, respectively) and the angles (α₁', α₂', α₃', respectively) between the longitudinal axes (44', 45', 46', respectively) of the corresponding two slots in the drive apparatus are shown in Figure 8. According to a preferred embodiment of the invention, the angles between any two of the longitudinal axes of the slots in the head of the drive apparatus are equal to each other (α₁'= α₂' = α₃') and are 120°.

When the protrusions (48, 49, 50) on the head of the drive apparatus in accordance with the invention are coupled with the grooves (17, 18, 19) on the head of the fastener in accordance with the invention, the side walls on the sides of a groove in the fastener face the side walls of the corresponding protrusion in the drive apparatus (14b and 15a with 48a and 48b; 15b and 16a with 50a and 50b; 14a and 16b with 49a and 49b). The angles between the side walls of the protrusions in the drive apparatus (β₁', β₂', β₃') are shown in Figure 8. The angle between the side walls of each protrusion in the drive apparatus may be different from the angles between the side walls of the other protrusions, or the angle between the side walls of the at least two protrusions may be the same. According to the preferred embodiment of the invention, the angle between the side walls of each protrusion is equal to the angles between the side walls of the other protrusions (β₁'= β ₂'=β₃') and is 50° to 105°, preferably 60° to 100°, more preferably 70° to 95°.

However, as clearly depicted in Figure 8, the width of the slots (44, 45, 46) in which the support elements (14, 15, 16) in the fastener are engaged decreases as the slots (44, 45, 46) extend radially from the periphery of the head towards the center (w₂'<w₁'). According to a preferred embodiment of the invention, the maximum width (w₁') of the slots (44, 45, 46) in the drive apparatus at the level of the head periphery (41a) and the width (w₂') of the slots (44, 45, 46) extending towards the center (47) at a certain distance from the center (47) (i.e. a certain radius from the center) are also the same.

The drive apparatus (40) in accordance with the invention is compatible with the fastener (10) described within the scope of the invention and can be used to apply torque in the tightening and loosening of any fastener that can be tightly engaged with the drive apparatus.

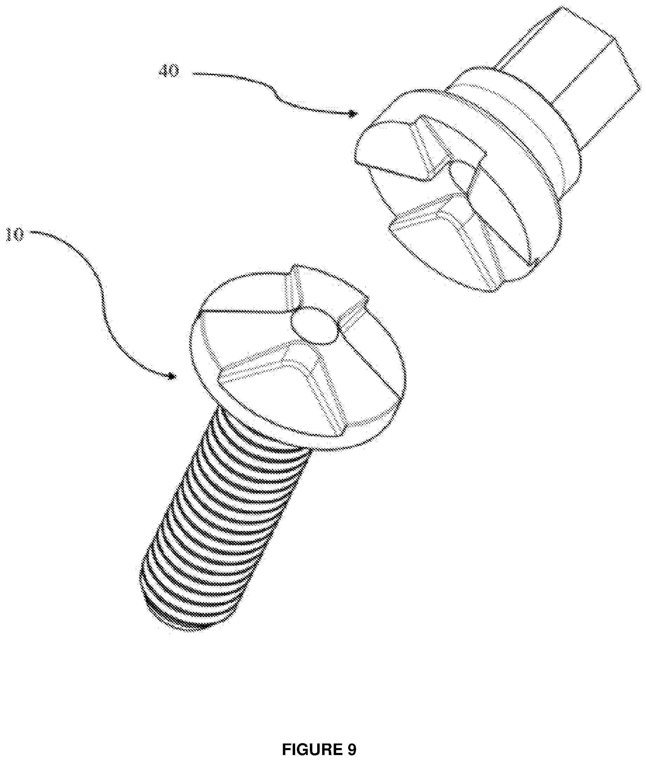

The view of the combination of the fastener (10) in accordance with the invention and the drive apparatus (40) in accordance with the invention as described above is given in Figure 9. The fastener (10) can be self-centered to the drive apparatus (40), and the problems such as stripping, locking, deformation of the system during assembly and insertion are eliminated and the assembly or disassembly process is carried out properly thanks to the easy and tight engagement of the abovementioned support elements (14, 15, 16) in the original design of the fastener (10) to the slots (44, 45, 46) in the drive apparatus and the protrusions (48, 49, 50) in the drive apparatus to the grooves (17, 19, 18) in the fastener.

### REFERENCE NUMBERS GIVEN IN THE FIGURE

10 Fastener
11 Head
   11a Periphery of the Head
12 Flange
   12a Periphery of the Flange
   12b Upper Surface of the Flange
   12c Lower Surface of the Flange
13 Shaft
   13a Shaft End
   13b Threaded Part of the Shaft
14 Support Element
   14a Support Element Side Wall
      14a' Upper Edge of the Support Element Side Wall
      14a" Lower Edge of the Support Element Side Wall
   14b Support Element Side Wall
      14b' Upper Edge of the Support Element Side Wall
      14b" Lower Edge of the Support Element Side Wall
   14' Longitudinal Axis of the Support Element
15 Support Element
   15a Support Element Side Wall
      15a' Upper Edge of the Support Element Side Wall
      15a" Lower Edge of the Support Element Side Wall
   15b Support Element Side Wall
      15b' Upper Edge of the Support Element Side Wall
      15b" Lower Edge of the Support Element Side Wall
   15' Longitudinal Axis of the Support Element
16 Support Element
   16a Support Element Side Wall
      16a' Support Element Side Wall Upper Edge
      16a" Support Element Side Wall Lower Edge
   16b Support Element Side Wall
      16b' Upper Edge of the Support Element Side Wall
      16b" Lower Edge of the Support Element Side Wall
   16' Longitudinal Axis of the Support Element
17 Groove
18 Groove
19 Groove
20 Head Center
21 Fastener Intermediate Wall
22 Fastener Intermediate Wall
23 Fastener Intermediate Wall
40 Drive Apparatus
41 Head Part of the Drive Apparatus
   41a Periphery of the Head Part of the Drive Apparatus
42 Neck of Drive Apparatus
43 Holding Part of Drive Apparatus
44 Slot in the Head Part of Drive Apparatus
   44' Longitudinal Axis of the Slot in the Head Part of Drive Apparatus
45 Slot in the Head Part of Drive Apparatus
   45' Longitudinal Axis of the Slot in the Head Part of Drive Apparatus
46 Slot in the Head Part of Drive Apparatus
   46' Longitudinal Axis of the Slot in the Head Part of Drive Apparatus
47 Center of the Head Part of the Drive Apparatus
48 Protrusion in the Drive Apparatus
   48a Side Wall of the Protrusion in the Drive Apparatus
   48b Side Wall of the Protrusion in the Drive Apparatus
   48c Upper Surface of the Protrusion in the Drive Apparatus
49 Protrusion in the Drive Apparatus
   49a Side Wall of the Protrusion in the Drive Apparatus
   49b Side Wall of the Protrusion in the Drive Apparatus
   49c Upper Surface of the Protrusion in the Drive Apparatus
50 Protrusion in the Drive Apparatus
   50a Side Wall of the Protrusion in the Drive Apparatus
   50b Side Wall of the Protrusion in the Drive Apparatus
   50c Upper Surface of the Protrusion in the Drive Apparatus
51 Intermediate Wall of the Drive Apparatus
52 Intermediate Wall of the Drive Apparatus
53 Intermediate Wall of the Drive Apparatus
(X) Longitudinal Axis of the Fastener
(w) Width of the Support Element
(w₁) Maximum Width of Each Support Element (14, 15, 16) Aligned with the Periphery of the Head (11a)
(w₁') Maximum Width of Slots (44, 45, 46) in Drive Apparatus Aligned with the Periphery of Head (41a)
(w₂) The Width of the Support Elements (14, 15, 16) Extending Towards the Center (20) at a Certain Distance from the Center (20) Radially
(w₂') The Width of the Slots (44, 45, 46) Extending Towards the Center (47) at a Certain Distance from the Center (47) Radially
(d₁) Minimum Depth of Slots in Drive Apparatus
(d₂) Maximum Depth of Slots in Drive Apparatus
(h₁) Minimum Height of the Support Element
(h₂) Maximum Height of the Support Element
(Y) Horizontal Plane
(α') Angle of Each Lower Edge on the Side Walls of Support Elements with Horizontal Plane
(α") Angle of Each Upper Edge on the Side Walls of Support Elements with Horizontal Plane
(α₁) Angle between Longitudinal Axis (14') of First Support Element and Longitudinal Axis (15') of Second Support Element
(α₁') The angle of Longitudinal Axes (44' and 45') of the Slots in the Head Part of the Drive Apparatus with each other
(α₂) Angle between Longitudinal Axis (15') of Second Support Element and Longitudinal Axis (16') of Third Support Element
(α₂') The angle of Longitudinal Axes (45' and 46') of the Slots in the Head Part of the Drive Apparatus with each other
(α₃) Angle between Longitudinal Axis (16') of Third Support Element and Longitudinal Axis (14') of First Support Element
(α₃') The angle of Longitudinal Axes (46' and 44') of the Slots in the Head Part of the Drive Apparatus with each other
(β₁) The Angle between the Side Walls (14b and 15a) of the Two Support Elements Facing Each Other
(β₁') The Angle between the Side Walls (49a and 49b) of the Protrusion in the Drive Apparatus
(β₂) The Angle between the Side Walls (15b and 16a) of the Two Support Elements Facing Each Other
(β₂') The Angle between the Side Walls (50a and 50b) of the Protrusion in the Drive Apparatus
(β₃) The Angle between the Side Walls (16b and 14a) of the Two Support Elements Facing Each Other
(β₃') The Angle between the Side Walls (48a and 48b) of the Protrusion in the Drive Apparatus

## Claims

1. The fastener (10), comprising
- a threaded shaft (13)
- a flange part (12),
- a head part (11) comprising a center (20), a periphery (11a), at least three support elements (14, 15, 16), and at least three groove parts (17, 18, 19), each of which are located between two successive support elements and separates the support elements from each other, wherein the upper surface of each support element (14, 15, 16) is a planar surface inclined linearly from the periphery (11a) towards the center (20),
the height of each of the support elements, whose longitudinal axes (14', 15', 16') intersect at the center (20) of the head increases as they extend radially from the periphery (11a) of the head to the center (20) of the head, and
the side walls (14a, 14b; 15a, 15b; 16a, 16b) on both sides of each support element (14, 15, 16) and the intermediate walls (21, 22, 23) connecting the side walls of the two successive support elements facing each other form the surfaces in which the drive apparatus is engaged to the fastener for tightening and loosening and the torque is transferred to the fastener and the
width of each of the support elements (14; 15; 16) gradually decreases from the periphery (11a) of the head towards the center (20),
the width of each of the groove parts (17, 18, 19) gradually decreases from the periphery (11a) of the head towards the center (20).

2. A fastener (10) according to claim 1, **characterized in that** each side wall (14a; 14b; 15a; 15b; 16a; 16b) of the support elements comprises an upper edge and a lower edge (14a' and 14a"; 14b' and 14b"; 15a' and 15a"; 15b' and 15b"; 16a' and 16a"; 16b' and 16b").

3. A fastener (10) according to claim 1 or 2, **characterized in that** the upper edge and the lower edge (14a' and 14a"; 14b' and 14b"; 15a' and 15a"; 15b' and 15b"; 16a' and 16a"; 16b' and 16b") of the side wall are axially aligned.

4. A fastener (10) according to any one of claims 1 to 3, **characterized in that** the upper edge and the lower edge (14a' and 14a"; 14b' and 14b"; 15a' and 15a"; 15b' and 15b"; 16a' and 16a"; 16b' and 16b") move away from each other while the side wall (14a; 14b; 15a; 15b; 16a; 16b) extends radially from the periphery (11a) of the head towards the center (20).

5. A fastener (10) according to any one of the preceding claims, **characterized in that** the flange part includes the upper surface (12b) and the lower surface (12c), and its upper surface (12b) extends radially inclined from the periphery of the flange (11a) to the center (20).

6. A fastener (10) according to any one of the preceding claims, **characterized in that** the angle (α') of the lower edge (14a"; 14b"; 15a"; 15b"; 16a"; 16b") on each side wall of the support elements (14, 15, 16) with the horizontal axis (Y) is between 0° and 45° while extending radially from the periphery of the head (11a) to the center (20).

7. A fastener (10) according to any one of the preceding claims, **characterized in that** at least two of the angles (α₁, α₂, α₃) between the longitudinal axes (14'; 15'; 16') of any two successive support elements are equal to each other.

8. A fastener (10) according to claim 7, **characterized in that** the angles between the longitudinal axes (14'; 15'; 16') of the support elements are equal to each other (α₁=α₂=α₃).

9. The drive apparatus (40), which can be engaged to a fastener (10), comprising
- a holding part (43),
- a neck part (42),
- a head part (41) comprising a center (47), a periphery (41a), at least three protrusions (48, 49, 50), and at least three slots (44, 45, 46), each of which are located between two successive protrusions and separate the protrusions from each other, wherein the base surface of each slot (44, 45, 46) is a planar surface inclined linearly from the periphery (41a) towards the center (47),
the depth of each of the slots, whose longitudinal axes (44', 45', 46') intersect at the center of the head (47), increases while extending radially from the periphery of the head (41a) to the center (47),
the width of the slots (44, 45, 46) decreases as it extends radially from the periphery of the head (41a) to the center (47),
the width of each of the protrusions (48, 49, 50) decreases as the protrusions (48, 49, 50) extend radially from the periphery (41a) towards the center (47) and the side walls (48a, 48b; 49a, 49b; 50a, 50b) on both sides of each protrusion (48, 49, 50) and the intermediate walls (51, 52, 53) connecting these side walls form the surfaces in which the drive apparatus is engaged to the fastener for tightening and loosening and the torque is transferred from the drive apparatus to the fastener.

10. A drive apparatus (40) according to claim 9, **characterized in that** the protrusions (48, 49, 50) on the head part extend inclined from the periphery (41a) of the head towards the center (47).

11. A drive apparatus (40) according to claim 9 or 10, **characterized in that** the angle between the side walls of the protrusions on the head part is between 50° and 105°.

12. A drive apparatus (40) according to any one of the claims 9 to 11, **characterized in that** at least two of the angles (α₁', α₂', α₃') between the longitudinal axes (44', 45', 46') of the two successive slots are equal to each other.

13. A combination of the fastener (10) and the drive apparatus (40), comprising
- a fastener (10) according to claim 1, and
- a drive apparatus (40) according to claim 9.

## Patentansprüche

1. Befestigungselement (10), umfassend
- einen Gewindeschaft (13),
- einen Flanschteil (12),
- einen Kopfteil (11), umfassend ein Zentrum (20), einen Außenumfang (11a), mindestens drei Stützelemente (14, 15, 16) und mindestens drei Nutabschnitte (17, 18, 19), von denen sich jeder zwischen zwei aufeinanderfolgenden Stützelementen befindet und die Stützelemente voneinander trennt, wobei
die obere Oberfläche jedes Stützelements (14, 15, 16) eine ebene Fläche ist, die sich linear geneigt vom Außenumfang (11a) zum Zentrum (20) erstreckt, die Höhe jedes Stützelements, dessen Längsachsen (14', 15', 16') sich im Zentrum (20) des Kopfteils schneiden, zunimmt, wenn sich die Stützelemente radial vom Außenumfang (11a) des Kopfteils zum Zentrum (20) des Kopfteils erstrecken, und
die Seitenwände (14a, 14b; 15a, 15b; 16a, 16b) auf beiden Seiten jedes Stützelements (14, 15, 16) und die Zwischenwände (21, 22, 23), welche die einander zugewandten Seitenwände der zwei aufeinanderfolgenden Stützelemente miteinander verbinden, die Flächen bilden, an denen das Antriebswerkzeug zum Festziehen und Lösen mit dem Befestigungselement in Eingriff gelangt und über die das Drehmoment auf das Befestigungselement übertragen wird, und die Breite jedes Stützelements (14; 15; 16) vom Außenumfang (11a) des Kopfteils zum Zentrum (20) hin allmählich abnimmt, wobei die Breite jedes Nutabschnitts (17, 18, 19) vom Außenumfang (11a) des Kopfteils zum Zentrum (20) hin allmählich abnimmt.

2. Befestigungselement (10) nach Anspruch 1, **dadurch gekennzeichnet, dass** jede Seitenwand (14a; 14b; 15a; 15b; 16a; 16b) der Stützelemente eine Oberkante und eine Unterkante (14a' und 14a"; 14b' und 14b"; 15a' und 15a"; 15b' und 15b"; 16a' und 16a"; 16b' und 16b") aufweist.

3. Befestigungselement (10) nach Anspruch 1 oder 2, **dadurch gekennzeichnet, dass** die Oberkante und die Unterkante (14a' und 14a"; 14b' und 14b"; 15a' und 15a"; 15b' und 15b"; 16a' und 16a"; 16b' und 16b") der Seitenwand axial miteinander ausgerichtet sind.

4. Befestigungselement (10) nach einem der Ansprüche 1 bis 3, **dadurch gekennzeichnet, dass** sich die Oberkante und die Unterkante (14a' und 14a"; 14b' und 14b"; 15a' und 15a"; 15b' und 15b"; 16a' und 16a"; 16b' und 16b") voneinander entfernen, während sich die Seitenwand (14a; 14b; 15a; 15b; 16a; 16b) radial vom Außenumfang (11a) des Kopfteils zum Zentrum (20) hin erstreckt.

5. Befestigungselement (10) nach einem der vorhergehenden Ansprüche, **dadurch gekennzeichnet, dass** der Flanschteil die obere Oberfläche (12b) und die untere Oberfläche (12c) aufweist und sich seine obere Oberfläche (12b) radial geneigt vom Außenumfang des Flansches (11a) zum Zentrum (20) erstreckt.

6. Befestigungselement (10) nach einem der vorhergehenden Ansprüche, **dadurch gekennzeichnet, dass** der Winkel (α') der Unterkante (14a"; 14b"; 15a"; 15b"; 16a"; 16b") an jeder Seitenwand der Stützelemente (14, 15, 16) zur horizontalen Achse (Y) zwischen 0° und 45° liegt, während sich die Unterkante radial vom Außenumfang des Kopfteils (11a) zum Zentrum (20) erstreckt.

7. Befestigungselement (10) nach einem der vorhergehenden Ansprüche, **dadurch gekennzeichnet, dass** mindestens zwei der Winkel (α₁, α₂, α₃) zwischen den Längsachsen (14'; 15'; 16') jeweils zweier aufeinanderfolgender Stützelemente gleich groß sind.

8. Befestigungselement (10) nach Anspruch 7, **dadurch gekennzeichnet, dass** die Winkel zwischen den Längsachsen (14'; 15'; 16') der Stützelemente gleich groß sind (α₁=α₂=α₃).

9. Antriebswerkzeug (40), das mit einem Befestigungselement (10) in Eingriff gebracht werden kann, umfassend
- einen Halterungsteil (43),
- einen Halsteil (42),
- einen Kopfteil (41), umfassend ein Zentrum (47), einen Außenumfang (41a), mindestens drei Vorsprünge (48, 49, 50) und mindestens drei Schlitze (44, 45, 46), von denen sich jeder zwischen zwei aufeinanderfolgenden Vorsprüngen befindet und die Vorsprünge voneinander trennt, wobei
die Grundfläche jedes Schlitzes (44, 45, 46) eine ebene Fläche ist, die sich linear geneigt vom Außenumfang (41a) zum Zentrum (47) erstreckt,
die Tiefe jedes Schlitzes, dessen Längsachsen (44', 45', 46') sich im Zentrum des Kopfteils (47) schneiden, zunimmt, während sich der Schlitz radial vom Außenumfang des Kopfteils (41a) zum Zentrum (47) erstreckt,
die Breite der Schlitze (44, 45, 46) abnimmt, wenn sie sich radial vom Außenumfang des Kopfteils (41a) zum Zentrum (47) erstrecken,
die Breite jedes Vorsprungs (48, 49, 50) abnimmt, wenn sich die Vorsprünge (48, 49, 50) radial vom Außenumfang (41a) zum Zentrum (47) erstrecken, und
die Seitenwände (48a, 48b; 49a, 49b; 50a, 50b) auf beiden Seiten jedes Vorsprungs (48, 49, 50) und die Zwischenwände (51, 52, 53), welche diese Seitenwände miteinander verbinden, die Flächen bilden, an denen das Antriebswerkzeug zum Festziehen und Lösen mit dem Befestigungselement in Eingriff gelangt und über die das Drehmoment vom Antriebswerkzeug auf das Befestigungselement übertragen wird.

10. Antriebswerkzeug (40) nach Anspruch 9, **dadurch gekennzeichnet, dass** sich die Vorsprünge (48, 49, 50) am Kopfteil geneigt vom Außenumfang (41a) des Kopfteils zum Zentrum (47) erstrecken.

11. Antriebswerkzeug (40) nach Anspruch 9 oder 10, **dadurch gekennzeichnet, dass** der Winkel zwischen den Seitenwänden der Vorsprünge am Kopfteil zwischen 50° und 105° liegt.

12. Antriebswerkzeug (40) nach einem der Ansprüche 9 bis 11, **dadurch gekennzeichnet, dass** mindestens zwei der Winkel (α₁', α₂', α₃') zwischen den Längsachsen (44', 45', 46') zweier aufeinanderfolgender Schlitze gleich groß sind.

13. Kombination aus dem Befestigungselement (10) und dem Antriebswerkzeug (40), umfassend
- ein Befestigungselement (10) nach Anspruch 1 und
- ein Antriebswerkzeug (40) nach Anspruch 9.

## Revendications

1. L'élément de fixation (10), comprenant
- une tige filetée (13),
- une partie de bride (12),
- une partie de tête (11) comprenant un centre (20), une périphérie (11a), au moins trois éléments de support (14, 15, 16) et au moins trois parties de rainure (17, 18, 19), dont chacune est située entre deux éléments de support successifs et sépare les éléments de support les uns des autres, dans lequel la surface supérieure de chaque élément de support (14, 15, 16) est une surface plane inclinée linéairement de la périphérie (11a) vers le centre (20), la hauteur de chacun des éléments de support, dont les axes longitudinaux (14', 15', 16') se croisent au centre (20) de la tête, augmente à mesure qu'ils s'étendent radialement de la périphérie (11a) de la tête vers le centre (20) de la tête, et
les parois latérales (14a, 14b ; 15a, 15b ; 16a, 16b) des deux côtés de chaque élément de support (14, 15, 16) et les parois intermédiaires (21, 22, 23) reliant les parois latérales des deux éléments de support successifs se faisant face forment les surfaces dans lesquelles l'appareil d'entraînement est engagé avec l'élément de fixation pour le serrage et le desserrage et le couple est transféré à l'élément de fixation et la largeur de chacun des éléments de support (14 ; 15 ; 16) diminue progressivement de la périphérie (11a) de la tête vers le centre (20),
la largeur de chacune des parties de rainure (17, 18, 19) diminue progressivement de la périphérie (11a) de la tête vers le centre (20).

2. Un élément de fixation (10) selon la revendication 1, **caractérisé en ce que** chaque paroi latérale (14a ; 14b ; 15a ; 15b ; 16a ; 16b) des éléments de support comprend un bord supérieur et un bord inférieur (14a' et 14a" ; 14b' et 14b" ; 15a' et 15a" ; 15b' et 15b" ; 16a' et 16a" ; 16b' et 16b").

3. Un élément de fixation (10) selon la revendication 1 ou 2, **caractérisé en ce que** le bord supérieur et le bord inférieur (14a' et 14a" ; 14b' et 14b" ; 15a' et 15a" ; 15b' et 15b" ; 16a' et 16a" ; 16b' et 16b") de la paroi latérale sont alignés axialement.

4. Un élément de fixation (10) selon l'une quelconque des revendications 1 à 3, **caractérisé en ce que** le bord supérieur et le bord inférieur (14a' et 14a" ; 14b' et 14b" ; 15a' et 15a" ; 15b' et 15b" ; 16a' et 16a" ; 16b' et 16b") s'éloignent l'un de l'autre à mesure que la paroi latérale (14a ; 14b ; 15a ; 15b ; 16a ; 16b) s'étend radialement de la périphérie (11a) de la tête vers le centre (20).

5. Un élément de fixation (10) selon l'une quelconque des revendications précédentes, **caractérisé en ce que** la partie de bride inclut la surface supérieure (12b) et la surface inférieure (12c), et sa surface supérieure (12b) s'étend radialement de manière inclinée de la périphérie de la bride (11a) vers le centre (20).

6. Un élément de fixation (10) selon l'une quelconque des revendications précédentes, **caractérisé en ce que** l'angle (α') du bord inférieur (14a" ; 14b" ; 15a" ; 15b" ; 16a" ; 16b") sur chaque paroi latérale des éléments de support (14, 15, 16) avec l'axe horizontal (Y) est compris entre 0° et 45° lorsqu'il s'étend radialement de la périphérie de la tête (11a) vers le centre (20).

7. Un élément de fixation (10) selon l'une quelconque des revendications précédentes, **caractérisé en ce qu'**au moins deux des angles (α₁, α₂, α₃) entre les axes longitudinaux (14' ; 15' ; 16') de deux éléments de support successifs quelconques sont égaux l'un à l'autre.

8. Un élément de fixation (10) selon la revendication 7, **caractérisé en ce que** les angles entre les axes longitudinaux (14' ; 15' ; 16') des éléments de support sont égaux les uns aux autres (α₁=α₂=α₃).

9. L'appareil d'entraînement (40), qui peut être engagé avec un élément de fixation (10), comprenant
- une partie de préhension (43),
- une partie de col (42),
- une partie de tête (41) comprenant un centre (47), une périphérie (41a), au moins trois saillies (48, 49, 50) et au moins trois fentes (44, 45, 46), dont chacune est située entre deux saillies successives et sépare les saillies les unes des autres, dans lequel
la surface de base de chaque fente (44, 45, 46) est une surface plane inclinée linéairement de la périphérie (41a) vers le centre (47),
la profondeur de chacune des fentes, dont les axes longitudinaux (44', 45', 46') se croisent au centre de la tête (47), augmente au fur et à mesure de l'extension radiale à partir de la périphérie de la tête (41a) vers le centre (47), la largeur des fentes (44, 45, 46) diminue à mesure qu'elle s'étend radialement de la périphérie de la tête (41a) vers le centre (47),
la largeur de chacune des saillies (48, 49, 50) diminue à mesure que les saillies (48, 49, 50) s'étendent radialement de la périphérie (41a) vers le centre (47) et
les parois latérales (48a, 48b ; 49a, 49b ; 50a, 50b) des deux côtés de chaque saillie (48, 49, 50) et les parois intermédiaires (51, 52, 53) reliant ces parois latérales forment les surfaces dans lesquelles l'appareil d'entraînement est engagé avec l'élément de fixation pour le serrage et le desserrage et le couple est transféré de l'appareil d'entraînement à l'élément de fixation.

10. Un appareil d'entraînement (40) selon la revendication 9, **caractérisé en ce que** les saillies (48, 49, 50) sur la partie de tête s'étendent de manière inclinée de la périphérie (41a) de la tête vers le centre (47).

11. Un appareil d'entraînement (40) selon la revendication 9 ou 10, **caractérisé en ce que** l'angle entre les parois latérales des saillies sur la partie de tête est compris entre 50° et 105°.

12. Un appareil d'entraînement (40) selon l'une quelconque des revendications 9 à 11, **caractérisé en ce qu'**au moins deux des angles (α₁', α₂', α₃') entre les axes longitudinaux (44', 45', 46') des deux fentes successives sont égaux l'un à l'autre.

13. Une combinaison de l'élément de fixation (10) et de l'appareil d'entraînement (40), comprenant
- un élément de fixation (10) selon la revendication 1, et
- un appareil d'entraînement (40) selon la revendication 9.
